# EUROPEAN PATENT APPLICATION

(11) **EP 4 603 169 A1**
(43) Date of publication of application: **20.08.2025**
(21) Application number: 22962055.4
(22) Date of filing: 13.10.2022
(51) Int. Cl.: B01D 29/90, B01D 29/01, G01N 1/04

(54) **RECOVERY IMPLEMENT AND RECOVERY SYSTEM**

(71) Applicant: SHIMADZU CORPORATION, Kyoto-shi, Kyoto 604-8511 (JP)
(72) Inventor: IKEZAWA, Yoshio, Kyoto-shi, Kyoto 604-8511 (JP)
(74) Representative: Kilian Kilian & Partner mbB
(86) International application number: PCT/JP2022/038155
(87) International publication number: WO 2024/079835

(57) **Abstract**

A collection instrument (100) collects a target substance contained in a discharged solution discharged from each of a plurality of treatment apparatuses (1A, 1B, 1C) that treat a sample. The collection instrument includes a plurality of filtering portions (110A, 110B, 110C) provided in correspondence with the plurality of treatment apparatuses, respectively, each of the plurality of filtering portions filtering the discharged solution discharged from the corresponding treatment apparatus to extract the target substance contained in the discharged solution, a holder (101) that integrally accommodates the plurality of filtering portions, and a discharge portion (102) that discharges a waste solution that has passed through each of the plurality of filtering portions. The holder is configured to be removed from the discharge portion together with the plurality of filtering portions where the target substance remains.

## Description

### TECHNICAL FIELD

The present disclosure relates to a collection instrument and a collection system, and particularly to a collection instrument that collects a target substance contained in a discharged solution discharged from each of a plurality of treatment apparatuses that treat a sample and a collection system including the collection instrument.

### BACKGROUND ART

A treatment apparatus capable of collecting a target substance to be collected by treating a sample taken from the sea or soil has conventionally been known. For example, PTL 1 discloses a purification apparatus that decomposes a contaminant contained in a sample by introducing a decomposition solution into a container where the sample is accommodated and collects a target substance lighter in specific gravity than a heavy solution by introducing the heavy solution into the container where the contaminant has been decomposed.

### CITATION LIST

### PATENT LITERATURE

PTL 1: WO2022/003995

### SUMMARY OF INVENTION

### TECHNICAL PROBLEM

A plurality of apparatuses described in PTL 1 may be used, for example, when there is a desire for treatment in parallel of a plurality of samples taken at different locations of the sea or soil, a desire for treatment in parallel of a plurality of samples taken with different methods, or a desire for increase in number of specimens to be treated even for a sample taken at the same location or with the same method. PTL 1, however, does not sufficiently study a method of collecting a target substance with the use of a plurality of apparatuses.

The present disclosure was made to solve a problem as described above, and an object thereof is to provide a technique to improve convenience in treatment of a sample with a plurality of treatment apparatuses.

### SOLUTION TO PROBLEM

A collection instrument according to one aspect of the present disclosure collects a target substance contained in a discharged solution discharged from each of a plurality of treatment apparatuses that treat a sample. The collection instrument includes a plurality of filtering portions provided in correspondence with the plurality of treatment apparatuses, respectively, each of the plurality of filtering portions filtering the discharged solution discharged from a corresponding treatment apparatus to extract the target substance contained in the discharged solution, a holder that integrally accommodates the plurality of filtering portions, and a discharge portion that discharges a waste solution that has passed through each of the plurality of filtering portions. The holder is configured to be removed from the discharge portion together with the plurality of filtering portions where the target substance remains.

A collection system according to another aspect of the present disclosure includes the collection instrument described above and the plurality of treatment apparatuses.

### ADVANTAGEOUS EFFECTS OF INVENTION

According to the present disclosure, the plurality of filtering portions integrally accommodated in the holder can filter discharged solutions discharged from respective treatment apparatuses and the waste solution that has passed through each of the plurality of filtering portions can be discharged. Furthermore, a target substance that remains in each of the plurality of filtering portions can collectively be collected by removing the holder together with the plurality of filtering portions. Therefore, convenience in treatment of the sample with the plurality of treatment apparatuses can be improved.

### BRIEF DESCRIPTION OF DRAWINGS

Fig. 1 is a diagram schematically showing a treatment apparatus according to an embodiment.
Fig. 2 is a diagram for illustrating a hardware configuration of the treatment apparatus according to the embodiment.
Fig. 3 is a flowchart of purification processing performed by a controller of the treatment apparatus according to the embodiment.
Fig. 4 is a diagram for illustrating a collection system according to the embodiment.
Fig. 5 is a diagram for illustrating a collection instrument according to the embodiment.
Fig. 6 is a diagram for illustrating a collection instrument according to a modification.

### DESCRIPTION OF EMBODIMENTS

An embodiment of the present disclosure will be described in detail below with reference to the drawings. The same or corresponding elements in the drawings have the same reference characters allotted and description thereof will not be repeated.

### [Configuration of Treatment Apparatus]

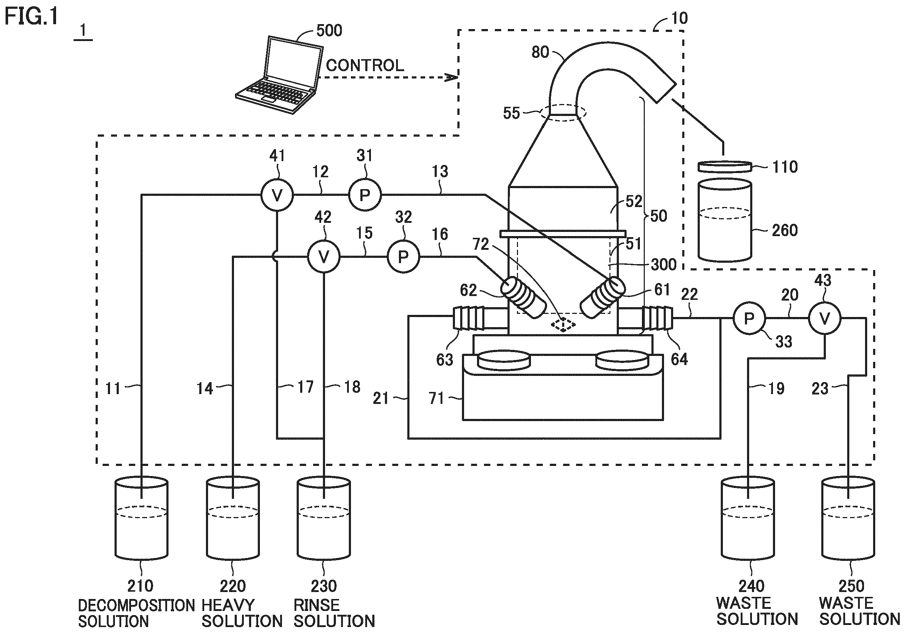

A main configuration of a treatment apparatus 1 according to an embodiment will be described with reference to Fig. 1. Fig. 1 is a diagram schematically showing treatment apparatus 1 according to the embodiment. As shown in Fig. 1, treatment apparatus 1 includes a purification instrument 10 that purifies a mixed sample and a controller 500 that controls purification instrument 10. Treatment apparatus 1 treats the mixed sample under control of purification instrument 10 by controller 500. Specifically, treatment apparatus 1 controls purification instrument 10 with controller 500 to purify the mixed sample and to collect a target substance to be collected that is contained in the mixed sample. "Purification" encompasses taking a target substance out of a mixture with the use of a decomposition solution, a heavy solution, and the like.

A "mixed sample" to be purified by treatment apparatus 1 may be in any form so long as it contains a target substance. Exemplary "mixed samples" include seawater and sand collected from the sea or the seashore, and processed products such as food or cosmetics. In the embodiment, seawater and sand collected from the sea or the seashore represent an exemplary "mixed sample." The "mixed sample" is also simply referred to as a "sample" below.

The "target substance" to be collected by treatment apparatus 1 may be in any form so long as it is a component to be collected by treatment apparatus 1. Exemplary "target substances" include microplastic which is fine plastic particles having a size not larger than 5 mm. In the embodiment, microplastic contained in seawater and sand collected from the sea or the seashore represents an exemplary "target substance".

Purification instrument 10 includes a container 50 where a sample is accommodated, pipes 11 to 22, pumps 31 to 33, electromagnetic valves 41 to 43, ports 61 to 64, a stirrer 71, a stirring bar 72, and a discharge pipe 80.

Container 50 includes a treatment portion 51 for treatment of a sample and an overflow portion 52 located above treatment portion 51, and it is separable into treatment portion 51 and overflow portion 52. Ports 61 to 64 are connected to a lower portion of treatment portion 51. A user opens container 50 by removing overflow portion 52 from treatment portion 51 and introduces a sample into treatment portion 51 in container 50. Though treatment portion 51 is formed in a columnar shape having a circular bottom surface in the embodiment, the bottom surface of treatment portion 51 may be in another shape such as a polygonal shape or an elliptical shape without being limited to the circular shape.

The sample accommodated in container 50 contains a contaminant, and a contaminant is treated with a treatment solution such as a decomposition solution in container 50. The "contaminant" refers to a foreign matter in a sample other than the target substance. In the embodiment, an organic contaminant having a property of an organic substance is exemplified as the "contaminant".

Container 50 has transmittance that allows external visual recognition of a condition of decomposition treatment of a contaminant contained in a sample accommodated in container 50. For example, treatment portion 51 and overflow portion 52 of container 50 are formed of a transparent material (for example, glass) so that the user can externally visually recognize the inside of container 50. Therefore, the user can externally observe the condition of decomposition treatment of the contaminant with the decomposition solution, that is performed in container 50.

Pipe 11 connects a decomposition solution reservoir 210 and electromagnetic valve 41 to each other. Pipe 12 connects electromagnetic valve 41 and pump 31 to each other. Pipe 13 connects pump 31 and port 61 provided in an outer circumferential portion of container 50 to each other. Decomposition solution reservoir 210 and port 61 of container 50 are thus connected to each other through pipes 11, 12, and 13 with electromagnetic valve 41 and pump 31 being interposed.

Pipe 14 connects a heavy solution reservoir 220 and electromagnetic valve 42 to each other. Pipe 15 connects electromagnetic valve 42 and pump 32 to each other. Pipe 16 connects pump 32 and port 62 provided in the outer circumferential portion of container 50 to each other. Heavy solution reservoir 220 and port 62 of container 50 are thus connected to each other through pipes 14, 15, and 16 with electromagnetic valve 42 and pump 32 being interposed.

Pipe 17 connects a rinse solution reservoir 230 and electromagnetic valve 41 to each other. In other words, while electromagnetic valve 41 is connected to decomposition solution reservoir 210 through pipe 11, it is connected also to rinse solution reservoir 230 through pipe 17. Rinse solution reservoir 230 and port 61 of container 50 are thus connected to each other through pipes 17, 12, and 13 with electromagnetic valve 41 and pump 31 being interposed.

Pipe 18 connects rinse solution reservoir 230 and electromagnetic valve 42 to each other. In other words, while electromagnetic valve 42 is connected to heavy solution reservoir 220 through pipe 14, it is connected also to rinse solution reservoir 230 through pipe 18. Rinse solution reservoir 230 and port 62 of container 50 are thus connected to each other through pipes 18, 15, and 16 with electromagnetic valve 42 and pump 32 being interposed.

Pipe 19 connects a waste solution reservoir 240 and electromagnetic valve 43 to each other. Pipe 20 connects electromagnetic valve 43 and pump 33 to each other. Pipe 21 connects pump 33 and port 63 provided in the outer circumferential portion of container 50 to each other. Waste solution reservoir 240 and port 63 of container 50 are thus connected to each other through pipes 19, 20, and 21 with electromagnetic valve 43 and pump 33 being interposed.

Pipe 22 connects pump 33 and port 64 provided in the outer circumferential portion of container 50 to each other. In other words, while pump 33 is connected to port 63 of container 50 through pipe 21, it is connected also to port 64 of container 50 through pipe 22. Waste solution reservoir 240 and port 64 of container 50 are thus connected to each other through pipes 19, 20, and 22 with electromagnetic valve 43 and pump 33 being interposed.

A pipe 23 connects a waste solution reservoir 250 and electromagnetic valve 43 to each other. In other words, while electromagnetic valve 43 is connected to waste solution reservoir 240 through pipe 19, it is connected also to waste solution reservoir 250 through pipe 23. Waste solution reservoir 250 and port 63 of container 50 are thus connected to each other through pipes 23, 20, and 21 with electromagnetic valve 43 and pump 33 being interposed. Waste solution reservoir 250 and port 64 of container 50 are connected to each other through pipes 23, 20, and 22 with electromagnetic valve 43 and pump 33 being interposed.

A treatment solution for treatment of a contaminant is stored in decomposition solution reservoir 210. The "treatment solution" may be in any form so long as an organic contaminant is treated therewith. In the embodiment, a decomposition solution that decomposes an organic contaminant is exemplified as the "treatment solution." The "decomposition solution" is, for example, an oxidizing agent such as oxygenated water (H2O2) and a mixture of oxygenated water (H2O2) and iron (II) oxide (FeO). When the "sample" is seawater and sand, "organic contaminants" are, for example, a scrap piece of wood and planktons that are mixed in seawater or sand.

A heavy solution for separation of a sample based on a specific gravity difference is stored in heavy solution reservoir 220. The "heavy solution" may be in any form so long as it separates the sample based on the specific gravity difference. In the embodiment, the "heavy solution" allows an inorganic contaminant having a property of an inorganic substance to settle based on the specific gravity difference. "Heavy solutions" include, for example, sodium chloride (NaCl), sodium iodide (NaI), and zinc chloride (ZnCl2). When seawater and sand are adopted as the "sample," "inorganic contaminants" are sand, glass, stone, or the like. A specific gravity of the "heavy solution" is set to be greater than a specific gravity of the "target substance" to be collected by treatment apparatus 1 and to be smaller than a specific gravity of the "inorganic contaminant." For example, when microplastic is adopted as the "target substance" to be collected by treatment apparatus 1 and sand, glass, stone, or the like is adopted as the "inorganic contaminant," the "heavy solution" is set to be greater in specific gravity than microplastic and to be smaller in specific gravity than sand, glass, stone, and the like. Specifically, the specific gravity of the "heavy solution" is set to approximately 1.5 to approximately 1.7.

A rinse solution which is a cleaning solution for cleaning of the inside of container 50 is stored in rinse solution reservoir 230. The "rinse solution" may be in any form so long as the inside of container 50 is cleaned therewith. An exemplary "rinse solution" is water or the like. The "rinse solution" plays a role to clean the inside of container 50 and a role to dilute the decomposition solution introduced into container 50.

A waste solution discharged from container 50 such as the heavy solution, the decomposition solution, the rinse solution, and sea water contained in the sample is stored in waste solution reservoirs 240 and 250.

Pump 31 introduces the decomposition solution in decomposition solution reservoir 210 or the rinse solution in rinse solution reservoir 230 into container 50 through port 61 under the control by controller 500. For example, pump 31 suctions the decomposition solution or the rinse solution through pipe 12 and emits the decomposition solution or the rinse solution through pipe 13 to port 61 by lowering a pressure on a suction side and raising a pressure on an emission side under the control by controller 500. Controller 500 can control pump 31 to adjust an amount of delivery (an amount of suction and an amount of discharge) by pump 31.

Pump 32 introduces the heavy solution in heavy solution reservoir 220 or the rinse solution in rinse solution reservoir 230 into container 50 through port 62 under the control by controller 500. For example, pump 32 suctions the heavy solution or the rinse solution through pipe 15 and emits the heavy solution or the rinse solution through pipe 16 to port 62 by lowering a pressure on the suction side and raising a pressure on the emission side under the control by controller 500. Controller 500 can control pump 32 to adjust an amount of delivery (an amount of suction and an amount of discharge) by pump 32.

Pump 33 discharges an unnecessary solution in container 50 as the waste solution through port 63 or port 64 to waste solution reservoir 240 or waste solution reservoir 250 under the control by controller 500. For example, pump 33 suctions the waste solution in container 50 through pipes 21 and 22 and emits the waste solution through pipe 20 to waste solution reservoirs 240 and 250 by lowering a pressure on the suction side and raising a pressure on the emission side under the control by controller 500. Controller 500 can control pump 33 to adjust an amount of delivery (an amount of suction and an amount of discharge) by pump 33.

Electromagnetic valve 41 switches a path to be connected to port 61 of container 50 between decomposition solution reservoir 210 and rinse solution reservoir 230 under the control by controller 500.

Electromagnetic valve 42 switches a path to be connected to port 62 of container 50 between heavy solution reservoir 220 and rinse solution reservoir 230 under the control by controller 500.

Electromagnetic valve 43 switches a path to be connected to ports 63 and 64 of container 50 between waste solution reservoir 240 and waste solution reservoir 250 under the control by controller 500. For example, the waste solution containing the heavy solution is discharged to waste solution reservoir 240 and the waste solution containing the decomposition solution is discharged to waste solution reservoir 250.

The decomposition solution from decomposition solution reservoir 210 or the rinse solution from rinse solution reservoir 230 delivered by pump 31 is introduced into container 50 through port 61. The heavy solution from heavy solution reservoir 220 or the rinse solution from rinse solution reservoir 230 delivered by pump 32 is introduced into container 50 through port 62. As pump 33 is driven, the waste solution in container 50 is discharged to pump 33 through ports 63 and 64. The waste solution delivered by pump 33 is discharged to waste solution reservoir 240 or waste solution reservoir 250.

Purification instrument 10 further includes a strainer 300 that traps the target substance contained in the sample and holds it within container 50. Strainer 300 is provided inside treatment portion 51 located on a lower side of container 50 which can be divided into two parts. Strainer 300 is generally in a shape of a basket and has a mesh size small enough to trap microplastic which is the target substance. For example, strainer 300 is made of steel use stainless (SUS) and provided with a plurality of openings each having a size small enough to trap microplastic which is the target substance. When microplastic is adopted as the target substance, the mesh size of strainer 300 should be small enough not to allow passage therethrough of a particle having a size of 0.1 mm to 5.0 mm, and the mesh size is preferably approximately 0.1 mm.

Stirrer 71 is, for example, a constant-temperature stirrer, and arranged below treatment portion 51 in container 50. Stirrer 71 rotates stirring bar 72 provided in container 50 under the control by controller 500 to stir the sample in container 50. Furthermore, stirrer 71 keeps a temperature of the sample in container 50 constant by heating container 50 from below container 50.

Discharge pipe 80 is connected to a discharge outlet 55 provided at an uppermost portion of overflow portion 52 in container 50, and a supernatant of the sample containing the target substance flows over container 50 and is discharged therethrough to the outside.

A filtering portion 110 collects the target substance contained in the supernatant of the sample discharged through discharge pipe 80 by filtering the supernatant. The supernatant that has passed through filtering portion 110 is collected in a waste solution reservoir 260. Filtering portion 110 has a mesh size small enough to trap microplastic which is the target substance. Filtering portion 110 is, for example, a wire gauze made of SUS or a membrane filter made of polytetrafluoroethylene (PTFE) (Teflon^{™}). When microplastic is adopted as the target substance, the mesh size of filtering portion 110 should be small enough not to allow passage therethrough of a particle having a size of 0.1 mm to 5.0 mm, and the mesh size is preferably approximately 0.1 mm.

Controller 500 may be implemented by a general-purpose computer or a dedicated computer for controlling purification instrument 10. For example, controller 500 may be an information terminal that performs prescribed information processing, such as a desktop personal computer (PC), a laptop PC, a smartphone, a smartwatch, a wearable device, and a tablet PCT. Controller 500 controls pumps 31 to 33, electromagnetic valves 41 to 43, and stirrer 71 in purification instrument 10. Controller 500 corresponds to one example of a "computer" in the present disclosure.

### [Hardware Configuration]

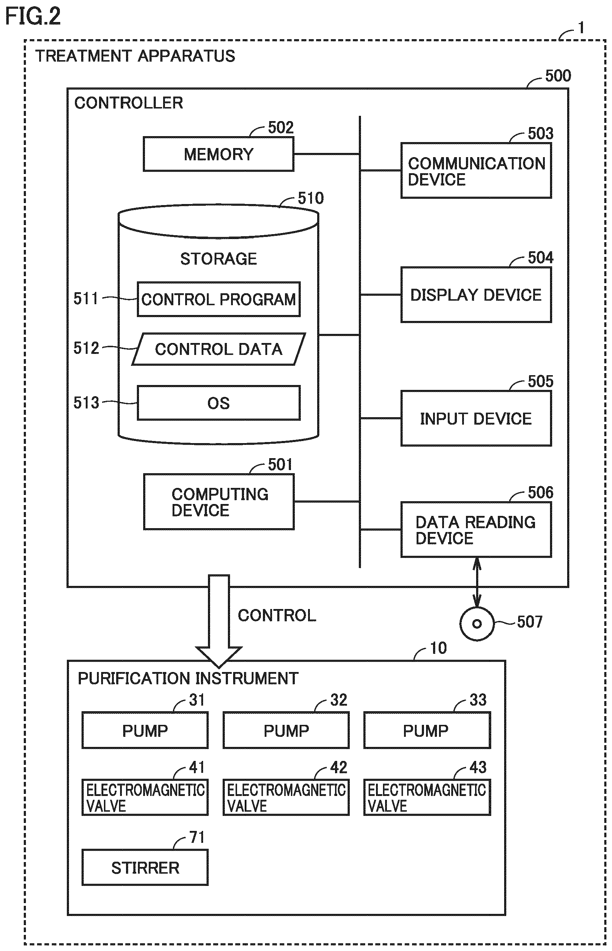

A hardware configuration of treatment apparatus 1 will be described with reference to Fig. 2. Fig. 2 is a diagram for illustrating a hardware configuration of treatment apparatus 1 according to the embodiment. As shown in Fig. 2, controller 500 includes, as main hardware elements thereof, a computing device 501, a memory 502, a communication device 503, a display 504, an input device 505, a data reading device 506, and a storage 510.

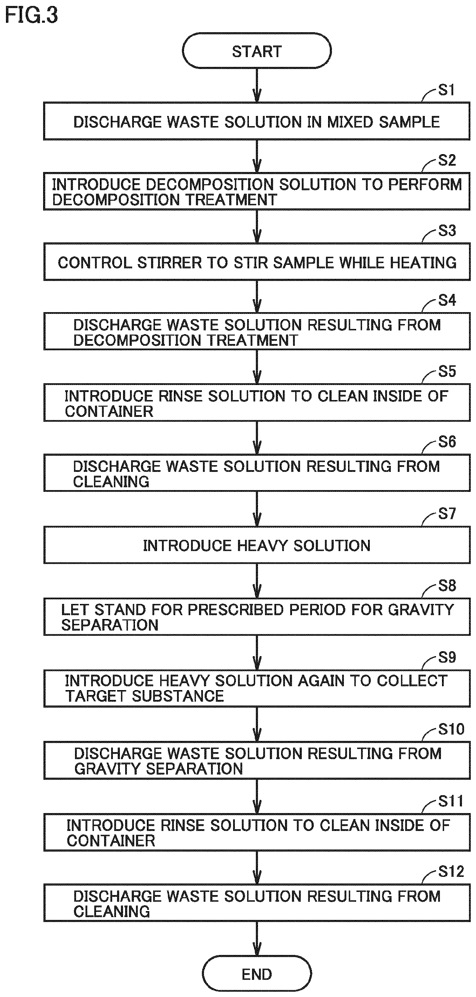

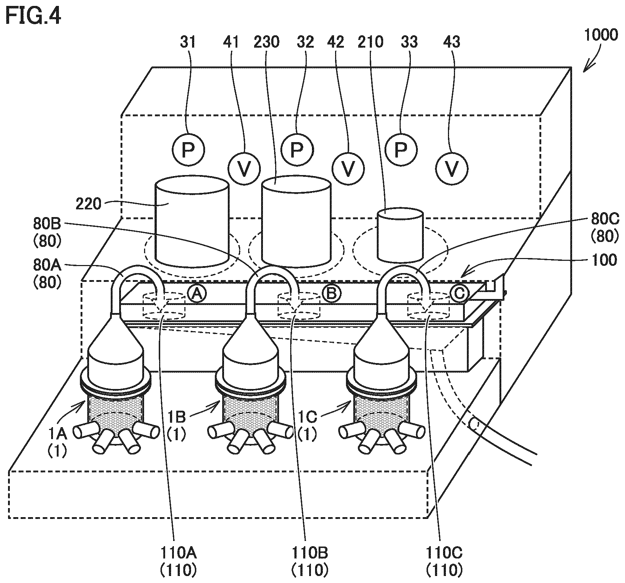

Computing device 501 is a processor that reads a program (for example, a control program 511 and an operating system (OS) 513) stored in storage 510 and develops the read program on memory 502 to execute the same. For example, computing device 501 performs processing (for example, processing in Figs. 3 and 4 which will be described later) for controlling purification instrument 10 by executing control program 511. The processor representing exemplary computing device 501 is implemented, for example, by a microcontroller, a central processing unit (CPU), a micro processing unit (MPU), or the like. Though the processor performs functions to perform various types of processing by executing a program, some or all of these functions may be performed by dedicated hardware circuitry such as an application specific integrated circuit (ASIC) or a field programmable gate array (FPGA). The "processor" is not limited to a processor in a narrow sense that performs processing in accordance with a stored program architecture like the CPU or the MPU, but may encompass hard-wired circuitry such as the ASIC or the FPGA. Therefore, the processor can also be read as processing circuitry, processing by which is defined in advance by a computer readable code and/or hard-wired circuitry. Computing device 501 may be implemented by a single chip or a plurality of chips. Furthermore, the processor and relating processing circuitry may be implemented by a plurality of computers connected to one another through wires or wirelessly over a local area network, a wireless network, or the like. The processor and the relating processing circuitry may be implemented by a cloud computer that performs remote computation based on input data and outputs a result of computation to another device located at a remote position.

Memory 502 provides a storage area where a program code, a work memory, or the like is temporarily stored in execution of any program by computing device 501. Memory 502 may be one or more non-transitory computer readable media. Memory 502 is implemented by a volatile memory such as a dynamic random access memory (DRAM) or a static random access memory (SRAM), or a non-volatile memory such as a read only memory (ROM) or a flash memory.

Communication device 503 includes an interface for output of a control signal for control of pumps 31 to 33, electromagnetic valves 41 to 43, stirrer 71, or the like of purification instrument 10. Communication device 503 may include an interface for transmission and reception of data to and from another device over a network (not shown). In this case, communication device 503 is in conformity with any communication scheme such as Ethernet^{®}, wireless local area network (LAN), and Bluetooth^{®}.

Display 504 is implemented, for example, by a liquid crystal display (LCD), and shows a program design screen about control of purification instrument 10, a setting screen about control of purification instrument 10, an alert screen on the occurrence of an abnormal condition, or the like.

Input device 505 is implemented, for example, by a keyboard, a mouse, or the like, and operated by the user. Input device 505 may be a touch panel provided on a screen of display 504. As the user operates input device 505, an input signal corresponding to the operation is inputted to computing device 501. When computing device 501 receives the input signal from input device 505, it outputs a control signal based on input by the user to pumps 31 to 33, electromagnetic valves 41 to 43, stirrer 71, or the like of purification instrument 10. Pumps 31 to 33, electromagnetic valves 41 to 43, or stirrer 71 operate(s) in accordance with the control signal from computing device 501.

Data reading device 506 reads data stored in a storage medium 507. Storage medium 507 may be a non-transitory and tangible computer readable storage medium. Storage medium 507 may be in any form such as a compact disc (CD), a digital versatile disc (DIVID), or a universal serial bus (USB) memory, so long as various types of data can be stored therein.

Storage 510 provides a storage area where various types of data required for purification processing or the like are stored. Storage 510 may be one or more computer readable storage media. Storage 510 is implemented, for example, by a non-volatile memory device such as a hard disk drive (HDD) or a solid state drive (SSD). Control program 511, control data 512, and OS 513 are stored in storage 510.

Control program 511 is a program in which contents of purification processing for purification of a sample are described, and executed by computing device 501. Control program 511 may be designed by a user with the use of input device 505, read from storage medium 507 by data reading device 506, or obtained through the network from another device such as a server by communication device 503.

Control data 512 is data used in execution of control program 511 by computing device 501. For example, control data 512 includes data such as a setting value for control of pumps 31 to 33, electromagnetic valves 41 to 43, and stirrer 71. Control data 512 may be inputted by a user with the use of input device 505, read from storage medium 507 by data reading device 506, or obtained through the network from another device such as a server by communication device 503.

OS 513 provides a basic function for computing device 501 to perform various types of processing.

### [Purification Processing]

Sample purification processing performed by treatment apparatus 1 will be described with reference to Fig. 3. Fig. 3 is a flowchart of purification processing performed by controller 500 of treatment apparatus 1 according to the embodiment. Each step shown in Fig. 3 is performed by execution of OS 513 and control program 511 by computing device 501 of controller 500.

Initially, for preparation for purification processing, the user opens container 50 by removing overflow portion 52 from treatment portion 51 and introduces a sample into treatment portion 51 in container 50. Thereafter, the user performs a start operation with the use of input device 505 of controller 500 to start control of purification instrument 10 by controller 500.

When controller 500 starts control of purification instrument 10, controller 500 controls pump 33 and electromagnetic valve 43 on a discharge side to discharge a liquid contained in the sample accommodated in container 50 as the waste solution to waste solution reservoir 250 through pipes 20 to 23 and ports 63 and 64 (S1). A substance other than the liquid such as microplastic is trapped by strainer 300 provided inside container 50 and held in container 50.

Controller 500 performs decomposition treatment for decomposing with the decomposition solution, the organic contaminant contained in the sample accommodated in container 50 (S2). Specifically, controller 500 deactivates pump 33 on the discharge side whereas it controls pump 31 and electromagnetic valve 41 on an introduction side to introduce the decomposition solution in decomposition solution reservoir 210 into container 50 through pipes 11 to 13 and port 61.

At this time, controller 500 controls the amount of delivery by pump 31 to introduce the decomposition solution in the amount set in advance by the user into container 50. For example, in order to trap microplastic with strainer 300, the contaminant should be decomposed with the decomposition solution in treatment portion 51 where strainer 300 is provided. Therefore, an amount of introduction of the decomposition solution in S1 is set to be equal to or smaller than a volume of treatment portion 51, for example, to 150 ml or less.

After the decomposition solution is introduced, controller 500 controls stirrer 71 to rotate stirring bar 72 provided in container 50 to stir the sample while certain heat is applied to container 50 (S3). A temperature of container 50 and a rotation speed and a rotation time period of stirring bar 72 are set in advance by the user. Controller 500 can thus accelerate decomposition of the organic contaminant with the decomposition solution by having the sample stirred while the sample is heated. Though heating is not necessarily required during stirring of the sample, decomposition of the organic contaminant is accelerated by the temperature of the sample maintained constant by heating.

After the decomposition treatment, controller 500 controls pump 33 and electromagnetic valve 43 on the discharge side to discharge the waste solution in container 50 included in the sample in which the organic contaminant has been decomposed to waste solution reservoir 250 through pipes 20 to 23 and ports 63 and 64 (S4). Microplastic which is the target substance is trapped by strainer 300 provided inside container 50 and held in container 50.

Controller 500 deactivates pump 33 on the discharge side whereas it controls pump 31 and electromagnetic valve 41 on the introduction side to introduce the rinse solution in rinse solution reservoir 230 into container 50 through pipes 17, 12, and 13 and port 61 to clean the inside of container 50 (S5). At this time, controller 500 controls an amount of delivery by pump 31 to introduce the rinse solution in an amount set in advance by the user into container 50. The amount of introduction of the rinse solution in S4 is set to be equal to or smaller than the volume of treatment portion 51, for example, to 150 ml or less.

Controller 500 deactivates pump 31 on the introduction side whereas it controls pump 33 and electromagnetic valve 43 on the discharge side to discharge the waste solution resulting from cleaning with the rinse solution to waste solution reservoir 250 through pipes 20 to 23 and ports 63 and 64 (S6). The inside of container 50 is thus cleaned with the rinse solution. Microplastic which is the target substance is trapped by strainer 300 provided inside container 50 and held in container 50. Thereafter, controller 500 may let the sample stand as it is for a prescribed period (for example, for one day) to dry the sample.

Controller 500 deactivates pump 33 on the discharge side whereas it controls pump 32 and electromagnetic valve 42 on the introduction side to introduce the heavy solution in heavy solution reservoir 220 into container 50 through pipes 14 to 16 and port 62 (S7). At this time, controller 500 controls the amount of delivery by pump 32 to introduce the heavy solution in an amount set in advance by the user into container 50.

While pump 32 on the introduction side is at a standstill, controller 500 lets the sample stand as it is for a prescribed period (for example, for one day) (S8). As the heavy solution is thus introduced into the sample in container 50 and let stand, an inorganic contaminant contained in the sample settles around the bottom of container 50 owing to the specific gravity difference. Microplastic which is the target substance lighter in specific gravity than the heavy solution, on the other hand, floats over a fluid level of the heavy solution.

Controller 500 again controls pump 32 and electromagnetic valve 42 to again introduce the heavy solution in heavy solution reservoir 220 into container 50 through pipes 14 to 16 and port 62 (S9). At this time, controller 500 controls the amount of delivery by pump 32 to introduce the heavy solution in the amount set in advance by the user into container 50. As the heavy solution is thus introduced again into the sample in container 50, a fluid level of the sample separated based on the specific gravity gradually rises in container 50 and the supernatant of the sample soon reaches discharge outlet 55 of container 50. Then, the supernatant of the sample is discharged as the discharged solution to the outside through discharge outlet 55 and discharge pipe 80.

The discharged solution discharged through discharge pipe 80 is filtered by filtering portion 110, and only the waste solution that has passed through filtering portion 110 is collected in waste solution reservoir 260. Microplastic which is a component lighter in specific gravity than the heavy solution remains at filtering portion 110.

After microplastic is collected as a result of purification of the sample, controller 500 has the inside of container 50 cleaned as post-treatment. Specifically, controller 500 controls pump 33 and electromagnetic valve 43 on the discharge side to discharge the waste solution in container 50 from which microplastic has been collected to waste solution reservoir 240 through pipes 19 to 22 and ports 63 and 64 (S10).

Controller 500 deactivates pump 33 on the discharge side whereas it controls pump 32 and electromagnetic valve 42 on the introduction side to introduce the rinse solution in rinse solution reservoir 230 into container 50 through pipes 18, 15, and 16 and port 62 to clean the inside of container 50 (S11). At this time, controller 500 controls the amount of delivery by pump 32 to introduce the rinse solution in the amount set in advance by the user into container 50.

Controller 500 deactivates pump 32 on the introduction side whereas it controls pump 33 and electromagnetic valve 43 on the discharge side to discharge the waste solution in container 50 into which the rinse solution has been introduced to waste solution reservoir 240 through pipes 19 to 22 and ports 63 and 64 (S12). The inside of container 50 is thus cleaned with the rinse solution. Thereafter, controller 500 quits processing relating to the present flow.

As set forth above, according to treatment apparatus 1 according to the embodiment, controller 500 automatically has the decomposition solution and the heavy solution introduced into the sample accommodated in container 50 or automatically has the waste solution discharged from container 50, at appropriate timing for an appropriate time period. Therefore, the user himself/herself does not have to introduce the decomposition solution and the heavy solution into container 50 or to discharge the waste solution from container 50. Furthermore, according to treatment apparatus 1 according to the embodiment, after microplastic is collected, controller 500 has used container 50 automatically cleaned. Thus, without depending on skills of the user, microplastic can be collected in a stable manner and the sample can accurately be purified.

### [Collection Instrument]

As described above, treatment apparatus 1 is configured to perform decomposition treatment on the sample accommodated in container 50 and to thereafter introduce the heavy solution into the container where the contaminant has been decomposed to thereby discharge the liquid containing the target substance lighter in specific gravity than the heavy solution as the discharged solution through discharge outlet 55 and discharge pipe 80 to the outside. A plurality of treatment apparatuses 1 may be used, for example, when there is a desire for treatment in parallel of a plurality of samples taken at different locations of the sea or soil, a desire for treatment in parallel of a plurality of samples taken with different methods, or a desire for increase in number of specimens to be treated even for a sample taken at the same location or with the same method. By using the plurality of treatment apparatuses 1, as treatment preceding an analysis step of analyzing the sample, the plurality of samples can be purified in parallel or simultaneously with the use of respective treatment apparatuses 1 and hence convenience of the user is improved.

When the plurality of samples are purified in parallel or simultaneously with the use of respective treatment apparatuses 1, however, the user has to prepare a plurality of collection instruments for individual collection of the discharged solution discharged from each of treatment apparatuses 1 owing to the function of the heavy solution, without the discharged solution being mixed. For example, in an example where treatment apparatus 1 shown in Fig. 1 is used, the user should prepare collection instruments such as filtering portion 110 for filtration of the discharged solution discharged from discharge pipe 80, waste solution reservoir 260 where the waste solution that has passed through filtering portion 110 is received, and the like as many as the number of treatment apparatuses 1. Therefore, the user has to secure a location for installation of a plurality of collection instruments corresponding to respective treatment apparatuses 1, and labor for individual installation of the plurality of collection instruments is also required.

Furthermore, when the plurality of samples are purified in parallel or simultaneously with the use of respective treatment apparatuses 1, the target substance collected by each filtering portion 110 may be mixed unless distinction among a plurality of filtering portions 110 corresponding to respective treatment apparatuses 1 is correctly made.

Then, the present disclosure provides a collection instrument 100 that collectively collects a target substance contained in a discharged solution discharged from each of a plurality of treatment apparatuses 1 and a collection system 1000 including collection instrument 100.

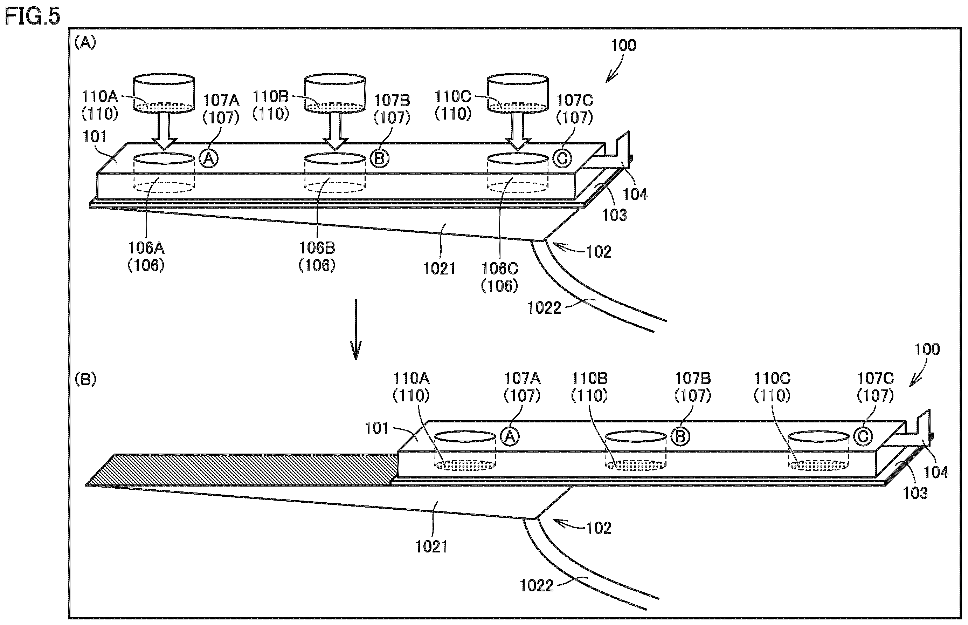

A main configuration of collection instrument 100 and collection system 1000 according to the embodiment will be described with reference to Figs. 4 and 5. Fig. 4 is a diagram for illustrating collection system 1000 according to the embodiment. Fig. 5 is a diagram for illustrating collection instrument 100 according to the embodiment.

As shown in Fig. 4, collection system 1000 according to the embodiment includes a plurality of treatment apparatuses 1A, 1B, and 1C and collection instrument 100. Collection instrument 100 is an instrument for reception of discharged solutions discharged from respective discharge pipes 80A, 80B, and 80C of the plurality of treatment apparatuses 1A, 1B, and 1C to collect a target substance contained in the discharged solution discharged from each of treatment apparatuses 1A, 1B, and 1C.

As shown in Fig. 5, collection instrument 100 includes a plurality of filtering portions 110A, 110B, and 110C, a holder 101, a discharge portion 102, a slide portion 103, and a grip portion 104.

The plurality of filtering portions 110A, 110B, and 110C correspond to filtering portion 110 described with reference to Fig. 1 and each filtering portion collects a target substance contained in a supernatant of the sample discharged from discharge pipe 80 by filtering the supernatant. The plurality of filtering portions 110A, 110B, and 110C are provided in correspondence with the plurality of treatment apparatuses 1, respectively. For example, as shown in Fig. 4, filtering portion 110A is arranged around an outlet of discharge pipe 80A of treatment apparatus 1A and receives the discharged solution discharged through discharge pipe 80A. Filtering portion 110B is arranged around an outlet of discharge pipe 80B of treatment apparatus 1B and receives the discharged solution discharged through discharge pipe 80B. Filtering portion 110C is arranged around an outlet of discharge pipe 80C of treatment apparatus 1C and receives the discharged solution discharged through discharge pipe 80C.

The plurality of filtering portions 110 are integrally accommodated in holder 101. Specifically, a plurality of accommodation portions 106 in a form of a hole for arrangement of respective filtering portions 110 are provided inside holder 101. The user can attach filtering portion 110 to holder 101 by fitting filtering portion 110 in accommodation portion 106. In the example in Fig. 5, filtering portion 110A is fitted in accommodation portion 106A, filtering portion 110B is fitted in accommodation portion 106B, and filtering portion 110C is fitted in accommodation portion 106C. The user can accommodate each of the plurality of filtering portions 110 in accommodation portion 106 at a desired position. A bottom of accommodation portion 106 opens such that the waste solution that has passed through filtering portion 110 flows downward to reach discharge portion 102.

A plurality of pieces of identification information 107 for identification of respective filtering portions 110 are added to holder 101. In the example in Fig. 5, identification information 107A "A" is added around accommodation portion 106A where filtering portion 110A is accommodated, identification information 107B "B" is added around accommodation portion 106B where filtering portion 110B is accommodated, and identification information 107C "C" is added around accommodation portion 106C where filtering portion 110C is accommodated. The user can thus correctly distinguish among the plurality of filtering portions 110 by checking the plurality of pieces of identification information 107 corresponding to respective filtering portions 110 attached to holder 101.

Discharge portion 102 is provided below holder 101 to receive the waste solution that has passed through each of the plurality of filtering portions 110 and to allow discharge of the waste solution to waste solution reservoir 260 or the like. Discharge portion 102 includes a reception portion 1021 and a discharge port 1022. Reception portion 1021 is provided to cover from below the plurality of accommodation portions 106 provided in holder 101 and collectively receives the waste solution that has passed through each of the plurality of filtering portions 110 accommodated in holder 101. Reception portion 1021 is formed like a funnel to introduce the waste solution collectively received from each of the plurality of filtering portions 110 to common discharge port 1022. The waste solution that has flowed through each of the plurality of filtering portions 110 to reception portion 1021 is discharged through discharge port 1022 to waste solution reservoir 260 or the like.

Slide portion 103 is provided below holder 101 and configured to operate integrally with holder 101. In an example where holder 101 and slide portion 103 are attached above discharge portion 102, slide portion 103 is arranged between holder 101 and discharge portion 102. Slide portion 103 can slide over discharge portion 102, for example, in a horizontal direction, and it is removable from discharge portion 102 by sliding beyond a length of discharge portion 102. As slide portion 103 slides over discharge portion 102, holder 101 configured integrally with slide portion 103 can also slide over discharge portion 102, and holder 101 is also removable from discharge portion 102 by sliding beyond the length of discharge portion 102.

Grip portion 104 is provided in an outer peripheral portion of holder 101. More preferably, grip portion 104 is provided at a position corresponding to a slide direction, in the outer peripheral portion of holder 101. The user can grip grip portion 104, and can slide holder 101 and slide portion 103 while the user grips grip portion 104. Though grip portion 104 is provided in holder 101 in the example in Fig. 5, grip portion 104 may be provided in slide portion 103.

With the use of collection instrument 100 configured as described above, the user can collect with collection instrument 100, the target substances contained in the discharged solutions discharged from the plurality of treatment apparatuses 1 in parallel or simultaneously. Specifically, as shown in Fig. 4, the user arranges respective discharge pipes 80 of the plurality of treatment apparatuses 1 in correspondence with individual filtering portions 110 attached to collection instrument 100. While the plurality of treatment apparatuses 1 are connected to collection instrument 100, the user purifies the plurality of samples in parallel or simultaneously with the use of respective treatment apparatuses 1. The discharged solutions discharged from the plurality of treatment apparatuses 1 are filtered by the plurality of filtering portions 110 corresponding to respective treatment apparatuses 1. The target substance purified by corresponding treatment apparatus 1 is thus collected in each of the plurality of filtering portions 110. The waste solution that has passed through each of the plurality of filtering portions 110 is collected by reception portion 1021 and discharged through discharge port 1022 to waste solution reservoir 260 or the like.

Fig. 5 (A) shows collection instrument 100 before holder 101 and slide portion 103 slide, and Fig. 5 (B) shows collection instrument 100 after holder 101 and slide portion 103 have slid. As shown in Fig. 5, the user can remove, together with holder 101, the plurality of filtering portions 110 integrally accommodated in holder 101 from discharge portion 102, by sliding slide portion 103 together with holder 101. Therefore, the user can collectively obtain each target substance collected from each treatment apparatus 1 by removing holder 101 from discharge portion 102 by sliding the same while gripping grip portion 104. The user can then pass each target substance accommodated in holder 101 collectively to a next analysis step.

The user can thus collectively collect with a single collection instrument 100, the target substance obtained by each of the plurality of treatment apparatuses 1, without securing the location for installation of a plurality of collection instruments corresponding to respective treatment apparatuses 1 or individually installing the plurality of collection instruments. For example, the user can simultaneously purify a plurality of samples taken from different seashores with the use of respective treatment apparatuses 1 and collectively collect with a single collection instrument 100, the target substances such as microplastic obtained by purification. Collection instrument 100 and collection system 1000 according to the embodiment can thus improve convenience in purification of the sample with the plurality of treatment apparatuses 1.

Since treatment apparatus 1 discharges the discharged solution by overflow with the use of the heavy solution, a tip end portion of discharge pipe 80 is connected to holder 101 downward from above filtering portion 110 as shown in Fig. 4. In this regard, holder 101 is not removed by being raised upward above discharge portion 102 but removed by being slid over discharge portion 102 with slide portion 103. The user can thus readily remove holder 101 from discharge portion 102 without being interfered by the tip end portion of discharge pipe 80. Holder 101 may be removable by being raised upward above discharge portion 102.

Alternatively, the user can collect in reception portion 1021, the waste solution that has passed through each of the plurality of filtering portions 110, and can have the waste solution collectively discharged through discharge port 1022 to waste solution reservoir 260 or the like.

Furthermore, the user can distinguish among the target substances collected by the plurality of filtering portions 110 without mix-up, based on identification information 107 added to holder 101 removed from discharge portion 102.

### [Collection Instrument According to Modification]

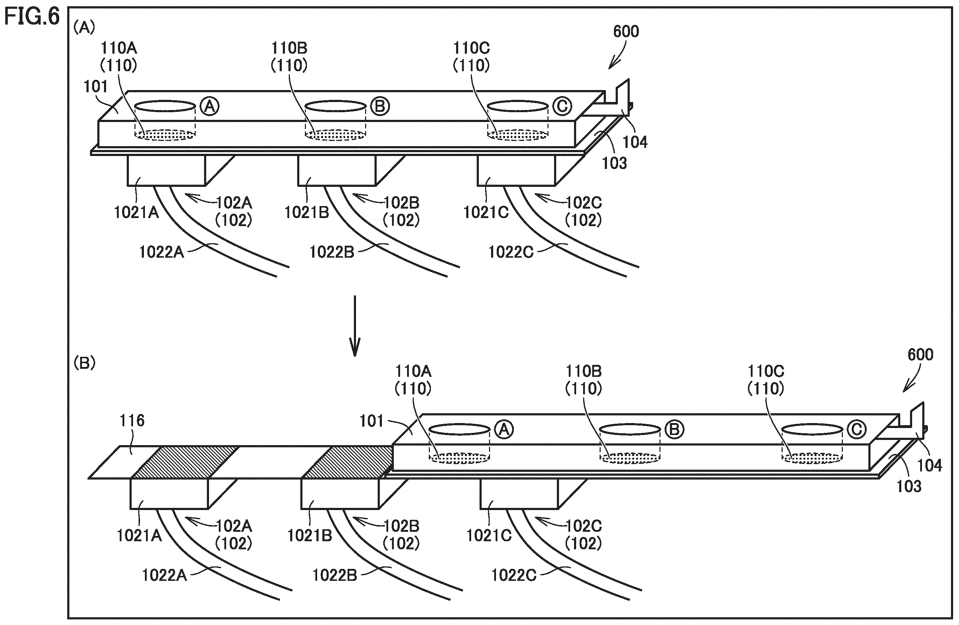

Though collection instrument 100 according to the embodiment has been described above, the collection instrument in the present disclosure may be configured as a collection instrument 600 according to a modification shown in Fig. 6. Fig. 6 is a diagram for illustrating collection instrument 600 according to the modification.

As shown in Fig. 6, collection instrument 600 includes a plurality of discharge portions 102 corresponding to respective filtering portions 110. In the example in Fig. 6, collection instrument 600 includes a plurality of discharge portions 102A, 102B, and 102C. Discharge portion 102A includes a reception portion 1021A and a discharge port 1022A. The waste solution that has passed through filtering portion 110A is received in reception portion 1021A and discharged through discharge port 1022A. Discharge portion 102B includes a reception portion 1021B and a discharge port 1022B. The waste solution that has passed through filtering portion 110B is received in reception portion 1021B and discharged through discharge port 1022B. Discharge portion 102C includes a reception portion 1021C and a discharge port 1022C. The waste solution that has passed through filtering portion 110C is received in reception portion 1021C and discharged through discharge port 1022C.

Collection instrument 600 thus includes the plurality of discharge portions 102 corresponding to respective filtering portions 110, so that the waste solution discharged from each of the plurality of treatment apparatuses 1 can be discharged to the outside without being mixed.

### (Aspects)

(Clause 1) A collection instrument according to one aspect collects a target substance contained in a discharged solution discharged from each of a plurality of treatment apparatuses that treat a sample. The collection instrument includes a plurality of filtering portions provided in correspondence with the plurality of treatment apparatuses, respectively, each of the plurality of filtering portions filtering the discharged solution discharged from a corresponding treatment apparatus to extract the target substance contained in the discharged solution, a holder that integrally accommodates the plurality of filtering portions, and a discharge portion that discharges a waste solution that has passed through each of the plurality of filtering portions. The holder is configured to be removed from the discharge portion together with the plurality of filtering portions where the target substance remains.

According to the collection instrument described in Clause 1, the plurality of filtering portions integrally accommodated in the holder filter discharged solutions discharged from respective treatment apparatuses, and a waste solution that has passed through each of the plurality of filtering portions can be discharged. Furthermore, by removing the holder together with the plurality of filtering portions, the target substance that remains in each of the plurality of filtering portions can collectively be collected. Therefore, convenience in treatment of the sample with the plurality of treatment apparatuses can be improved.

(Clause 2) The collection instrument described in Clause 1 further includes a slide portion provided between the holder and the discharge portion, the slide portion being configured to be removed from the discharge portion by sliding over the discharge portion together with holder.

According to the collection instrument described in Clause 2, a user can readily remove the holder from the discharge portion by sliding the slide portion together with the holder.

(Clause 3) The collection instrument described in Clause 2 further includes a grip portion configured to be gripped by a user for sliding the holder over the discharge portion.

According to the collection instrument described in Clause 3, the user can readily slide the slide portion together with the holder while the user grips the grip portion.

(Clause 4) In the collection instrument described in any one of Clauses 1 to 3, the discharge portion includes a common discharge port that discharges the waste solution that has passed through each of the plurality of filtering portions.

According to the collection instrument described in Clause 4, the user can collectively discharge the waste solution that has passed through each of the plurality of filtering portions through the common discharge port.

(Clause 5) In the collection instrument described in Clause 4, the discharge portion includes a reception portion in a form of a funnel, the reception portion receiving the waste solution that has passed through each of the plurality of filtering portions and being configured to introduce the waste solution to the discharge port.

According to the collection instrument described in Clause 5, the user can collect the waste solution that has passed through each of the plurality of filtering portions in the reception portion and collectively discharge the waste solution through the common discharge port.

(Clause 6) In the collection instrument described in any one of Clauses 1 to 3, the discharge portion includes a plurality of discharge ports that individually discharge the waste solutions that have passed through the plurality of filtering portions, respectively.

According to the collection instrument described in Clause 6, the user can discharge the waste solutions that have passed through the respective filtering portions through the individually corresponding discharge ports, without the waste solutions being mixed.

(Clause 7) In the collection instrument described in any one of Clauses 1 to 6, the holder includes a plurality of accommodation portions where the plurality of filtering portions are arranged, respectively.

According to the collection instrument described in Clause 7, the user can integrally accommodate the plurality of filtering portions in the holder by arranging the plurality of filtering portions in the respective accommodation portions provided in the holder.

(Clause 8) In the collection instrument described in any one of Clauses 1 to 7, a plurality of pieces of identification information for identification of respective ones of the plurality of filtering portions are added to the holder.

According to the collection instrument described in Clause 8, the user can distinguish among the target substances collected by the respective filtering portions without mix-up, based on the identification information added to the holder.

(Clause 9) In the collection instrument described in any one of Clauses 1 to 8, each of the plurality of treatment apparatuses includes a container where the sample is accommodated and the sample is separated based on a specific gravity difference by using a heavy solution and a discharge pipe that discharges a discharged solution resulting from separation to the collection instrument. Each of the plurality of filtering portions is arranged for the discharge pipe of the corresponding treatment apparatus.

According to the collection instrument described in Clause 9, the user can collectively collect, with the collection instrument, the target substances obtained by simultaneously treating a plurality of samples with respective treatment apparatuses, by arranging the discharge pipes of the respective treatment apparatuses in respective corresponding filtering portions.

(Clause 10) In the collection instrument described in any one of Clauses 1 to 9, the target substance is microplastic.

According to the collection instrument described in Clause 10, since microplastic that remains in each of the plurality of filtering portions can collectively be collected, convenience in treatment of the sample with the plurality of treatment apparatuses can be improved.

(Clause 11) A collection system according to one aspect includes the collection instrument described in any one of Clauses 1 to 9 and the plurality of treatment apparatuses.

According to the collection system described in Clause 11, the plurality of filtering portions integrally accommodated in the holder filter discharged solutions discharged from respective treatment apparatuses, and a waste solution that has passed through each of the plurality of filtering portions can be discharged. Furthermore, by removing the holder together with the plurality of filtering portions, the target substance that remains in each of the plurality of filtering portions can collectively be collected. Therefore, convenience in treatment of the sample with the plurality of treatment apparatuses can be improved.

It should be understood that the embodiment disclosed herein is illustrative and non-restrictive in every respect. The scope of the present invention is defined by the terms of the claims rather than the description of the embodiment above and is intended to include any modifications within the scope and meaning equivalent to the terms of the claims.

### REFERENCE SIGNS LIST

1, 1A, 1B, 1C treatment apparatus; 10 purification instrument; 11, 12, 13, 14, 15, 16, 17, 18, 19, 20, 21, 22, 23 pipe; 31, 32, 33 pump; 41, 42, 43 electromagnetic valve; 50 container; 51 treatment portion; 52 overflow portion; 55 discharge outlet; 61, 62, 63, 64 port; 71 stirrer; 72 stirring bar; 80, 80A, 80B, 80C discharge pipe; 100, 600 collection instrument; 101 holder; 102, 102A, 102B, 102C discharge portion; 103 slide portion; 104 grip portion; 106, 106A, 106B, 106C accommodation portion; 107, 107A, 107B, 107C identification information; 110, 110A, 110B, 110C filtering portion; 210 decomposition solution reservoir; 220 heavy solution reservoir; 230 rinse solution reservoir; 240, 250, 260 waste solution reservoir; 300 strainer; 500 controller; 501 computing device; 502 memory; 503 communication device; 504 display; 505 input device; 506 data reading device; 507 storage medium; 510 storage; 511 control program; 512 control data; 1000 collection system; 1021, 1021A, 1021B, 1021C reception portion; 1022, 1022A, 1022B, 1022C discharge port.

## Claims

1. A collection instrument that collects a target substance contained in a discharged solution discharged from each of a plurality of treatment apparatuses that treat a sample, the collection instrument comprising:
a plurality of filtering portions provided in correspondence with the plurality of treatment apparatuses, respectively, each of the plurality of filtering portions filtering the discharged solution discharged from a corresponding treatment apparatus to extract the target substance contained in the discharged solution;
a holder that integrally accommodates the plurality of filtering portions; and
a discharge portion that discharges a waste solution that has passed through each of the plurality of filtering portions, wherein
the holder is configured to be removed from the discharge portion together with the plurality of filtering portions where the target substance remains.

2. The collection instrument according to claim 1, further comprising a slide portion provided between the holder and the discharge portion, the slide portion being configured to be removed from the discharge portion by sliding over the discharge portion together with holder.

3. The collection instrument according to claim 2, further comprising a grip portion configured to be gripped by a user for sliding the holder over the discharge portion.

4. The collection instrument according to claim 1 or 2, wherein
the discharge portion includes a common discharge port that discharges the waste solution that has passed through each of the plurality of filtering portions.

5. The collection instrument according to claim 4, wherein
the discharge portion includes a reception portion in a form of a funnel, the reception portion receiving the waste solution that has passed through each of the plurality of filtering portions and being configured to introduce the waste solution to the discharge port.

6. The collection instrument according to claim 1 or 2, wherein
the discharge portion includes a plurality of discharge ports that individually discharge the waste solutions that have passed through the plurality of filtering portions, respectively.

7. The collection instrument according to claim 1 or 2, wherein
the holder includes a plurality of accommodation portions where the plurality of filtering portions are arranged, respectively.

8. The collection instrument according to claim 1 or 2, wherein
a plurality of pieces of identification information for identification of respective ones of the plurality of filtering portions are added to the holder.

9. The collection instrument according to claim 1 or 2, wherein
each of the plurality of treatment apparatuses includes
a container where the sample is accommodated and the sample is separated based on a specific gravity difference by using a heavy solution, and
a discharge pipe that discharges a discharged solution resulting from separation to the collection instrument, and
each of the plurality of filtering portions is arranged for the discharge pipe of the corresponding treatment apparatus.

10. The collection instrument according to claim 1 or 2, wherein
the target substance is microplastic.

11. A collection system comprising:
the collection instrument according to claim 1 or 2; and
the plurality of treatment apparatuses.
